Europäisches Patentamt

European Patent Office

Office européen des brevets

(11) Veröffentlichungsnummer: **0 191 755**
**A2**

## (12) EUROPÄISCHE PATENTANMELDUNG

(21) Anmeldenummer: 86890027.5

(22) Anmeldetag: 11.02.86

(51) Int. Cl.4: **A61C 11/00**

(30) Priorität: 12.02.85 AT 400/85

(43) Veröffentlichungstag der Anmeldung:
20.08.86 Patentblatt 86/34

(84) Benannte Vertragsstaaten:
BE CH DE FR GB IT LI LU NL SE

(71) Anmelder: Lisec, Bernhard
Kuferzeile 25
A-4810 Gmunden(AT)

(72) Erfinder: Lisec, Bernhard
Kuferzeile 25
A-4810 Gmunden(AT)

(74) Vertreter: Hübscher, Gerhard, Dipl.-Ing. et al
Patentanwälte Dipl.-Ing. Gerhard Hübscher
Dipl.-Ing. Helmut Hübscher Dipl.-Ing. Heiner
Hübscher Spittelwiese 7
A-4020 Linz(AT)

(54) Gerät zur oralfernen und patientenfernen Bestimmung der Scharnierachse und der linearen Grenzbewegungen des Unterkiefers.

(57) Gerät zur oralfernen und patientenfernen Bestimmung der Scharnierachse und der linearen Grenzbewegungen des Unterkiefers. Um aus der durch Registrierbisse festgelegten Lagebezeichnung von zwei Kiefermodellen, diese gelenksbezüglich richtig in einem Artikulator montieren zu können, besteht der Erfindungsgegenstand aus zwei rechteckigen paarigen Meßrahmen B1,B2 einem Verbindungssteg B1, einem zweiteiligen Unterkiefermodellträger A1, einem zweiteiligen oberen Modellhalter A2,A4, zwei Hilfsachsenhalter C1, zwei auf einer Achse angebrachten Zeigern C3 und einem auf einer Achse angebrachten Zeiger A3. Die auf einer Grundplatte entsprechend ihrer Funktion mit dieser fest, schwenkbar oder gelenkig feststellbar verbunden sind.

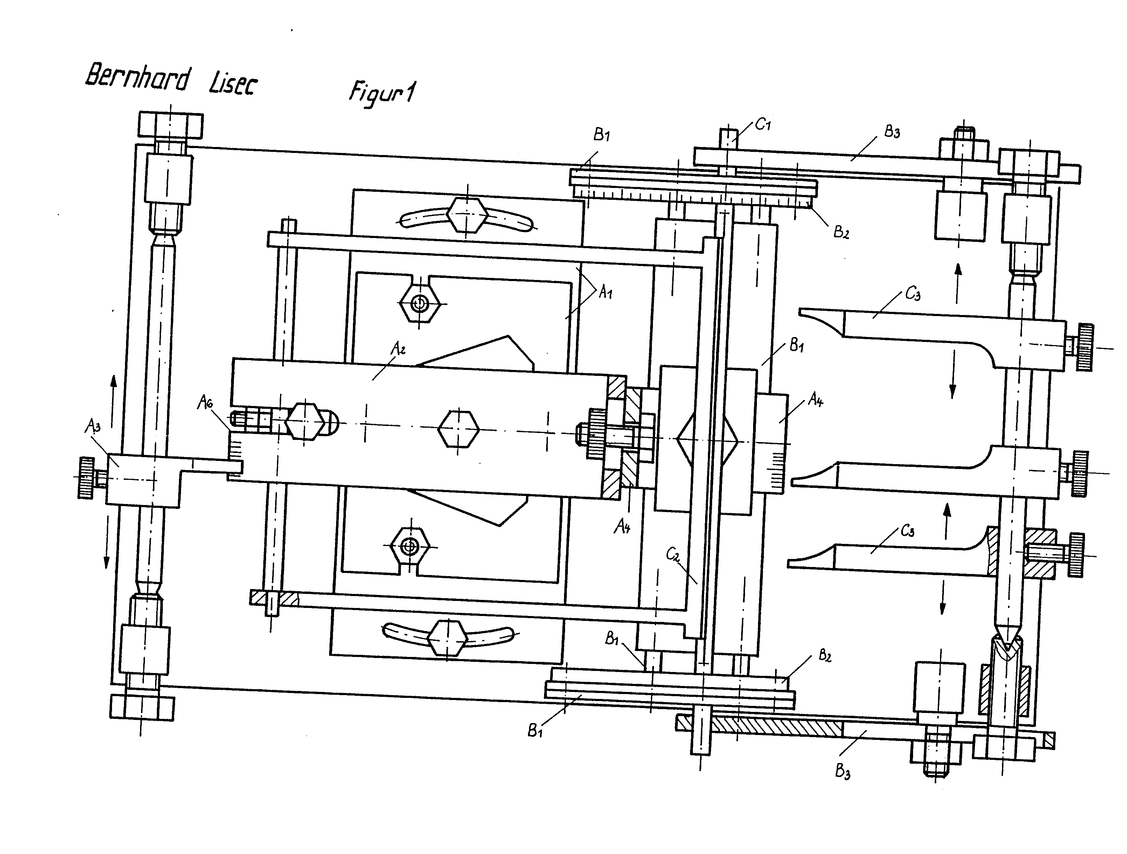

Bernhard Lisec    Figur 1

EP 0 191 755 A2

Gerät zur oralfernen und patientenfernen Bestimmung der Scharnierachse und der linearen Grenzbewegungen des Unterkiefers.

Diese Erfindung bezieht sich auf die Verwendung in der Zahnheilkunde zur Diagnostik und in der Zahntechnik.

Zur Zeit werden die Grenzbewegungen des Unterkiefers hauptsächlich mit Hilfe der pantographischen und der stereographischen Verfahren am Patienten und im Munde desselben mit einem beachtlichen Aufwand an Zeit und Geräten, die zum Teil individuell angefertigt werden, ermittelt. Zur Feststellung der Scharnierachse, diese ist eine gedachte verlängerte Achslinie, um die sich der Unterkiefer bei einfachen Öffnungs- und Schließbewegungen - scharnierartig in seinen Gelenken dreht, festzustellen, kommen Gesichtsbögen zur Anwendung. Ihre Konstruktion und Anwendung wurden von Hayes 1887 begonnen und bestehen, wenn genaue Ergebnisse angestrebt werden, heute im wesentlichen aus zwei Bögen, die aus Stangen durch entsprechende Verschraubungen die den individuellen Abmessungen des Patienten entsprechend zusammengesetzt werden. Je einer dieser Bögen findet seine Befestigung durch individuell gefertigte Platten am bezahnten oder unbezahnten Unter- und Oberkiefer mittels einer an diesen Platten befestigten Stange. Auf am Oberkieferbogen außen über dem Kiefergelenk angebrachten Schreibplatten werden in der Folge, durch am Bogen des Unterkiefers befestigte Schreibspitzen, bei wiederholten Scharnierbewegungen des Unterkiefers und entsprechendes Nachstellen des Unterkieferbogens, die Mittelpunkte dieser Bewegung auf den Schreibplatten sichtbar. Die Verbindung dieser Punkte stellt die gesuchte verlängerte Scharnierachse dar. Es ist nur dann möglich, in den bekannten Artikulatoren bogen- und kurvenrichtige Bewegungen zu simulieren, wenn die Scharnierachse eines entsprechenden Artikulators mit der ermittelten Scharnierachse des Patienten durch entsprechende achsenbezügliche Montage der Kiefermodelle im Artikulator genau übereinstimmt. Um diese Übereinstimmung zu erreichen, wird, nachdem die Gesichtsbögen von Patienten, ohne die Relation der Befestigungsplatten zu den registrierten zentrischen Punkten zu verändern, entfernt wurden, das Modell des Oberkiefers in die Eindrücke der Platten des oberen Gesichtsbogens eingesetzt. Es kann, wenn die zentrischen Punkte der Aufzeichnung mit der verlängerten Achse des Artikulatoroberteils in Übereinstimmung gebracht ist, durch Festgipsen mit Hilfe von Montageplatten oder mechanischen Befestigungen unter anderen nach DE - OS 3 030 585 (Eskodent) mit dem Artikulatoroberteil verbunden werden. Um ein bogen- und kurvenrichtiges Simulieren der Unterkieferbewegungen in entsprechend einstellbaren Artikulatoren zu ermöglichen, ist nach der achsenrichtigen Montage der Kiefermodelle noch ein, dem Kiefergelenksabstand des Patienten entsprechend richtiger Abstand der Artikulatorgelenke zu den Modellen Voraussetzung. Der genaue Abstand der Artikulatorgelenke wird mit einem von B.B. Mc Collum geschaffenem und von Charles E. Stuart und anderen verbesserten Aufzeichnungsgerät für Kieferbewegungen das zur Aufzeichnung der Kieferbewegungen über sechs am Gesichtsbogen entsprechend angebrachte Schreibplatten, und ihnen zugehörige Schreibstifte verfügt, wenn das Aufzeichnungsgerät scharnierachsbezüglich auf einen entsprechend einstellbaren Artikulator montiert ist. Durch entsprechendes seitliches Verschieben der Artikulatorgelenke, das solange erfolgt bis der Schreibstift die bogenförmigen Aufzeichnung auf der jeweils gegenüberliegenden vorderen horizontalen Schreibplatte, bei einer drehenden Seitbewegung, diese nachvollzieht, eingestellt.

Es ist Aufgabe der vorliegenden Erfindung: Nur durch die Anwendung von Registrierbissen die Modellmontage von entsprechend einstellbaren Artikulatoren zu ermöglichen.

Anmerkung: Registrierbisse sind gleichzeitig im Munde genommene Eindrücke der oberen und unteren bezahnten oder unbezahnten Kiefer in geeignetem Abformmaterial, welche die rechte, die linke und die vorgeschobene Stellung und für das Festlegen der Scharnierachsposition, die Stellung des geöffneten Unterkiefers zum Oberkiefer festhalten.

Vorteile vorliegender Erfindung sind:

Eine beachtliche Zeitersparnis bei der Registrierarbeit am Patienten. Das Ermitteln der Scharnierachsposition und den Grenzbewegungen kann eingeschulten Kräften überlassen werden.

Der Oberteil des Artikulators kann sehr genau und direkt nach dem Messvorgang im Gerät mit dem Oberkiefermodell verbunden werden, ebenso das Übertragen der Gelenkskopfdrehpunkte und der räumlichen Seitbewegung des Unterkiefers. Durch das Gerät wird das Nichterreichen des Scharnierachtposition bei der Registrasnahme sicht- und merkbar angezeigt.

Das Anwenden eines Gesichtsbogens entfällt. Zur Festlegung sind nur Registrierbisse notwendig.

Aufbau und Erklärung der Funktion der vorliegenden Erfindung. Das Gerät zur oralfernen und patientenfernen Bestimmung der Scharnierachse und der linearen Grenzbewegung des Unterkiefers besteht Fig. 1,2 und 3:

Aus einem auf der Grundplatte aus einem Oberteil und einem Unterteil bestehenden Unterkiefermodellträger A1, dessen Oberteil auf dem Unterteil auf zwei Kugelzapfen, die in entsprechenden Ausnehmungen an seiner Unterseite eingreifen, der dadurch auf dem Unterteil kippbar und durch Schrauben feststellbar, so angebracht ist, daß er nach horizontalem Schwenken mit seinem Unterteil auf der Grundplatte, durch zwei, bogenförmige Schlitze an beiden Seiten seines plattenförmigen Unterteils geführte Schrauben, auf der Grundplatte festgestellt werden kann.

Zwei rechteckigen, inneren Meßrahmen B2 Fig. 1,2 und 3, die mit einem Fuß genau parallel zueinander und je einer Kieferseite entsprechend Fig. 1,2,3 und 4 genau senkrecht, fest mit der Grundplatte verbunden sind. Aus vier an den Ecken der Grundplatte mit diesen fest verbundenen Lagerböcken, zwischen denen vorne und rückwärts je eine Achse, von der jede auf Spitzen zwischen den Lagerböcken spielfrei in diesen drehbar gelagert sind. Auf der vorderen Achse ist ein auf der Achse seitenverschieblich feststellbarer Zeiger A3 Fig. 1,2,3, der nach seinem Feststellen mit seiner Achse geschwenkt werden kann, angebracht. Auf der rückwärtigen Zeigerachse sind drei auf der Achse seiten verschiebliche Zeiger C3 Fig. 1,2,3 angebracht, die nach ihrem Feststellen mit der Achse gemeinsam schwenkbar sind. Ebenfalls mit der Grundplatte fest verbunden sind zwei Böcke, auf denen die Hilfsachsenhalter B3, Fig. 1,2,3,4,5 von denen für jede Seite einer, durch Schlitze in ihrer Länge verschieblich und schwenkbar mit Schrauben an den Böcken festgestellt werden können. Eine ihrer Funktion entsprechende zusammengehörige Gruppe von Teilen, die nicht fest mit dem Meßgerät verbunden sind, besteht aus zwei äußeren Meßrahmen.

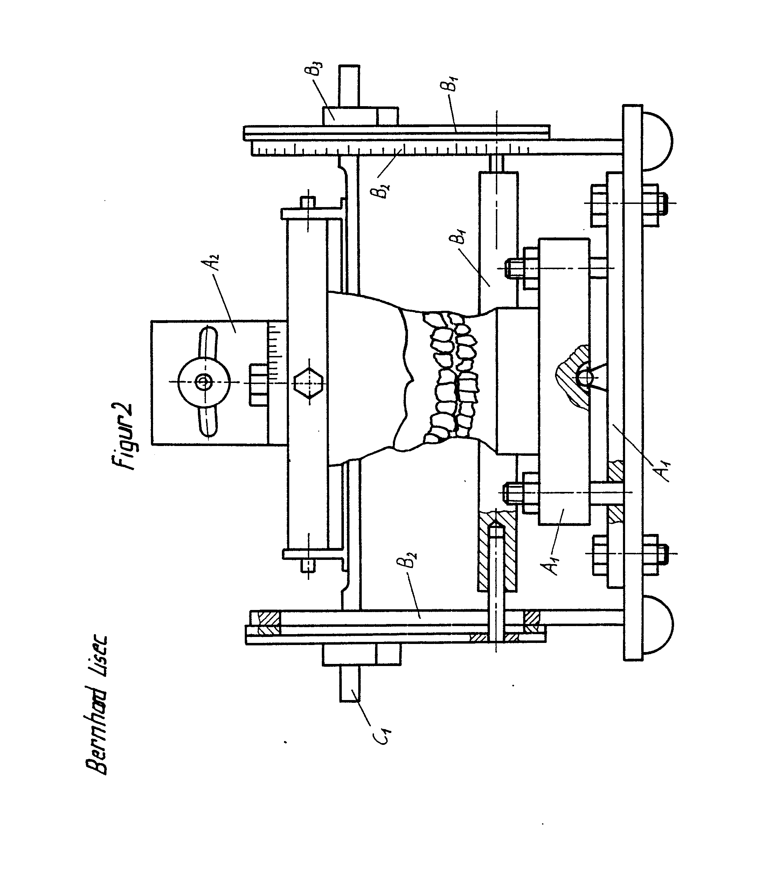

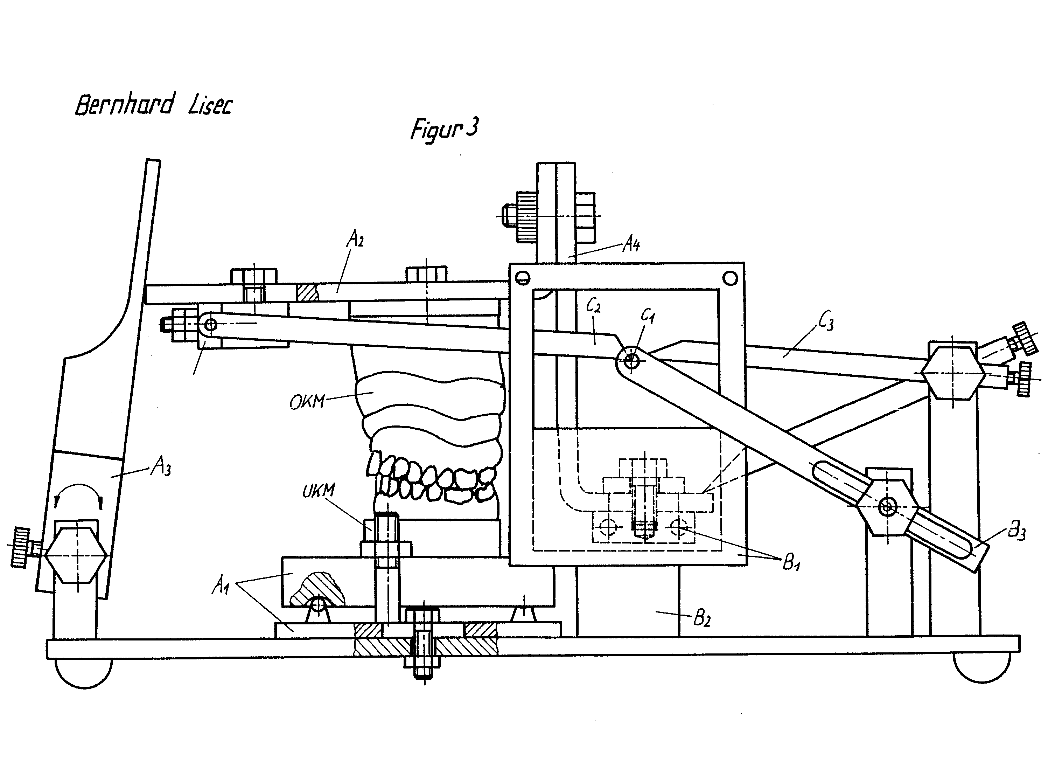

B1 Fig. 1,2,3,4, die in ihrer Länge und Breite gemeinsam mit den inneren Meßrahmen B2 auf gleiche Abmessung geschliffen sind. Die äußeren Meßrahmen B1 tragen im unteren Teil ihrer Innenseite je zwei Führungsstifte, die durch die Lichte der inneren, auf der Grundplatte feststehenden Meßrahmen B2 in der Weise hindurchreichen, daß die beiden äußeren Meßrahmen die durch einen rechteckigen flachen Verbindungssteg so verbunden sind, daß der Verbindungssteg der an seinen Stirnseiten den der Führungsstifte der äußeren Meßrahmen entsprechend genaue und parallele Bohrungen aufweist, wenn die äußeren Meßrahmen B1 mit ihren Führungsstiften in die Bohrungen des Verbindungssteges seitlich eingeschoben sind, dieser Steg bei einer seitlichen Verschiebung auf den Führungsstiften, die Kantendeckung der äußeren und der inneren Meßrahmen B1 und B2 an beiden Seiten nicht verändert Fig. 1 und 2. Eine in der Mitte des Steges angebrachte Gewindebohrung dient der Befestigung des zweiteiligen Oberkiefermodellhalters B4 und A2 Fig.3. Dessen als Verbindungsbügel ausgebildeter eine Anteil A4 Fig. 3, der durch eine wesentlich größere Bohrung in seinem abgewinkeltem Fuß ausgestattet ist, als es dem Durchmesser der Befestigungsschraube entspricht, die ihn einerseits mit einem Druckstück am Verbindungssteg der Teile B1 Fig. 3 befestigt, und andererseits durch eine Schraube, welche durch einen bogenförmigen Schlitz an seinem anderen oberen Ende, den Verbindungsbügel A4 mit seinem zweiten Teil des Modellhalters A2 Fig. 3 verbunden ist, auch dann, wenn der Oberkiefermodellhalter A2 sich schräg und horizontal gedreht zum Verbindungssteg der Teile von B1 befindet.

Oberkiefermodellhalterteil A2 Fig. 1,2,3 und 5 ist mit einer Montageplatte zur Befestigung des Oberkiefermodelles ausgerüstet. An seinem vorderen Ende befindet sich ein Schlitz A6 zur Aufnahme der Schwinge c2 zur Drehpolbestimmung Fig. 1,2,3,5. und eine Skala auf die der Zeiger A3 Fig. 1 und 3 eingeschwenkt werden kann. Die Schwinge C2 zur Drehpolbestimmung der Kiefergelenksköpfe besteht aus einem quaderförmigen Körper, der an einer Stirnseite einen Zapfen trägt um den ein Querbalken durch eine Schraubenmutter mit Gegenmutter einstellbar und spielfrei drehbar gelagert ist. An zwei Zapfen an Ende des Querbalkens findet ein Meßlineal C2, Fig.1,2,3 an zwei Stangen derart sine Aufhängung, daß es durch eine drehbare und die längsverschiebliche Befestigung der Schwinge im Schlitz des Oberkiefermodellhalters A2 mit seiner Meßkante genau auf die Achszentrumslinie der Hilfsachse C1 einstellbar ist Fig. 1,2,3.

Um Kiefermodelle scharnierachs- und gelenksbezüglich in einem entsprechend einstellbaren Artikulator mit Hilfe des Erfindungsgegenstandes richtig zu montieren und den Artikulator entsprechend den in Registrierbissen festgehaltenen möglichen Stellungen der Kiefer eines Patienten zueinander richtig einzustellen, ist wie folgt vorzugehen:

Das Ober- und Unterkiefermodell eines Patienten wird zwischen den Modellhaltern des Gerätes mit geschlossener Zahnreihe; bei zahnlosen Patienten wird die Stellung der Kiefer der Patienten die einer einwandfrei geschlossenen herzustellenden Zahnreihe beider Kiefer entspricht, durch eine entsprechende Bißnahme durch den Zahnarzt vorgenommen, so zwischen die Modellhalter A1 und A2 Fig. 3 des Gerätes, am einfachsten mit Gips so montiert, daß die festzustellende verlängerte Scharnierachse durch die fensterartige Öffnung der äußeren Meßrahmen B1 Fig. 3 führt. Der mittelwertige Abstand der Schneidezahnmitte zu den Kiefergelenksköpfen und der der Gelenksköpfe entspricht nach Bonwill einem Dreieck von 100 mm Seitenlänge.

Vor der Modellbefestigung wird das Gerät durch Einstecken von Paßstiften durch die an den oberen Ecken der Meßrahmen B1, B2 angebrachten Bohrungen und einstellen der Modellträger in paralleler Lage zu den Meßrahmen, die durch die Paßstifte in Kantendeckung fixiert sind, in die Ausgangsstellung der Messung gebracht. Die sich deckenden Kanten der Meßrahmen stellen die geometrische Basis für die zu vollziehenden Messungen dar. Da aus geometrischen und mechanischen Gründen eine genaue Lokalisierung der Scharnierachse mit dem Gerät nur möglich ist, wenn sich die Kiefermodelle mit ihrer sagittalen imaginären Öffnungsebene, die durch Einbringen eines Öffnungs-Registrates zwischen die Kiefermodelle gegenüber der Modellstellung bei Zahnreihenschluß definiert ist, müssen die Modelle mit ihrer Öffnungsebene genau parallel zur Ebene der Meßrahmen gebracht werden. Die Zentrierung wird nach dem seitlichen Ausziehen der äußeren Meßrahmen B1 durch seitliches und horizontales - schrittweises Verstellen des Unterkiefermodellhalters A1 und gleichzeitigem entsprechendem Einsetzen und Herausnehmen des Öffnungsregistrates solange vorgenommen, bis die für die Skalen A6 und A4 vorgesehenen Zeiger A3 und C3 an den Skalen von A2 und A4 nach Einfügen des Öffnungsregistrates in die Kiefermodelle gegenüber der geschlossenen Zahnreihe der Modelle keine Anweichung mehr anzeigen. Nach abgeschlossener Ausrichtung der Öffnungsebene der Kiefermodelle auf die Ebene der Registrierrahmen, werden Verschraubungen des Verbindungsbügels A4 zum Oberkiefermodellhalter und zum Verbindungssteg der Teile B1 gelöst, die äußeren Meßrahmen B1 werden wieder mit ihren Führungsstiften in den Steg B1 eingeschoben und durch Wiedereinstecken der Paßstifte in Deckung mit den feststehenden inneren Meßrahmen B1 fixiert. Der durch das Zentrieren der Modelle in verzahnter Stellung des Oderkiefers und Unterkiefermodells jetzt verdreht gestellte Oberkiefermodell träger A2, wird nun durch die konstruktive Ausbildung des Verbindungsbügels A4 möglich, er wird bei verzahnter Stellung der Modelle durch Anziehen seiner Verschraubungen mit den Teilen B1 starr verbunden. Nach dem daraufolgenden Entfernen der Paßstifte aus den Meßrahmen kann mit dem Auffinden der verlängerten imaginären Scharnierachse und ihrer Realisierung begonnen werden.

Zu Beginn der Messung befinden sich die Modelle Fig. 3 OKM UKM zueinander in verzahnter Stellung Fig. 1,2,. Die Kanten der Meßrahmen decken sich Fig. 1,2,3 die innen liegenden Meßrahmen B2 sind fest mit dem Gerät und Unterkiefermodell durch den Unterkiefermodellhalter A1 verbunden, die äußeren sind über A2,a4 und den Steg von B1 mit dem Oberkiefermodell verbunden.

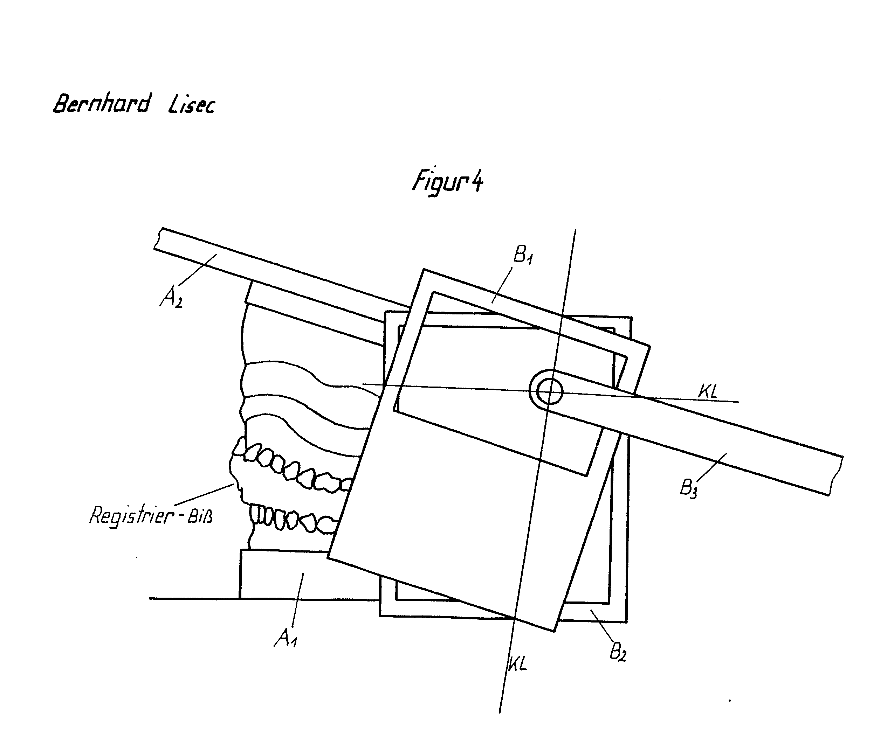

Durch Einfügen des Scharnierachsregistrates Fig. 4, zwischen Oberkiefer und Unterkiefermodell werden die außen liegenden Meßrahmen B1 dem registrierten Öffnungswinkel entsprechend gedreht. Die Seiten der Meßrahmen B1 und B2 bilden zueinander vier Winkel, Fig. 4, die Spitzen der gegenüberliegenden Winkel Fig. 4 werden durch Gerade, die Fig. 4 KL auf außen auf die Meßrahmen B1 geklebte Folie eingezeichnet werden, verbunden. Die Schnittpunkte dieser Verbindungslinien KL Fig. 4 beider Seiten ergeben das genaue achsiale Zentrum C1 der gesuchten Scharnierachse.

Am Gerät werden die zwei Hilfsachsenhalter B3, Fig. 1,2,3,4 und 5 auf die Achsmittelpunkte Fig. 1,2,3,4, C1 fixiert, durch deren Bohrungen wird die Hilfsachse C1 Fig. 1,2, geschoben, die zur Festlegung der Gelenkskopfdrehpole Fig. 5 und der exakten Montage eines Artikulatoroberteils am Oberkiefermodell Verwendung findet.

Kleine Fehler können bei der Konstruktion der Scharnierachse wie nachfolgend angegeben, ausgeglichen werden:

Wird mit nicht justierbaren Modellen der Versuch unternom-

men, eine Scharnierachse zu ermitteln, so zeigen die Meßrahmen ein sehr starke asymmetrische Abweichung gegenüber der rechten und linken Seite in ihrer Verwendung. Kleine Anweichungen werden an den Skalen der inneren Meßrahmen B2 abgelesen und müssen durch entsprechendes Verstellen der Modellzentriereinrichtung Fig. 1,2, A1 vor der Achspunktkonstruktion behoben werden.

Behebt man diese Mängel nicht, ergibt die Konstruktion eine völlig verfälschte Scharnierachslage.

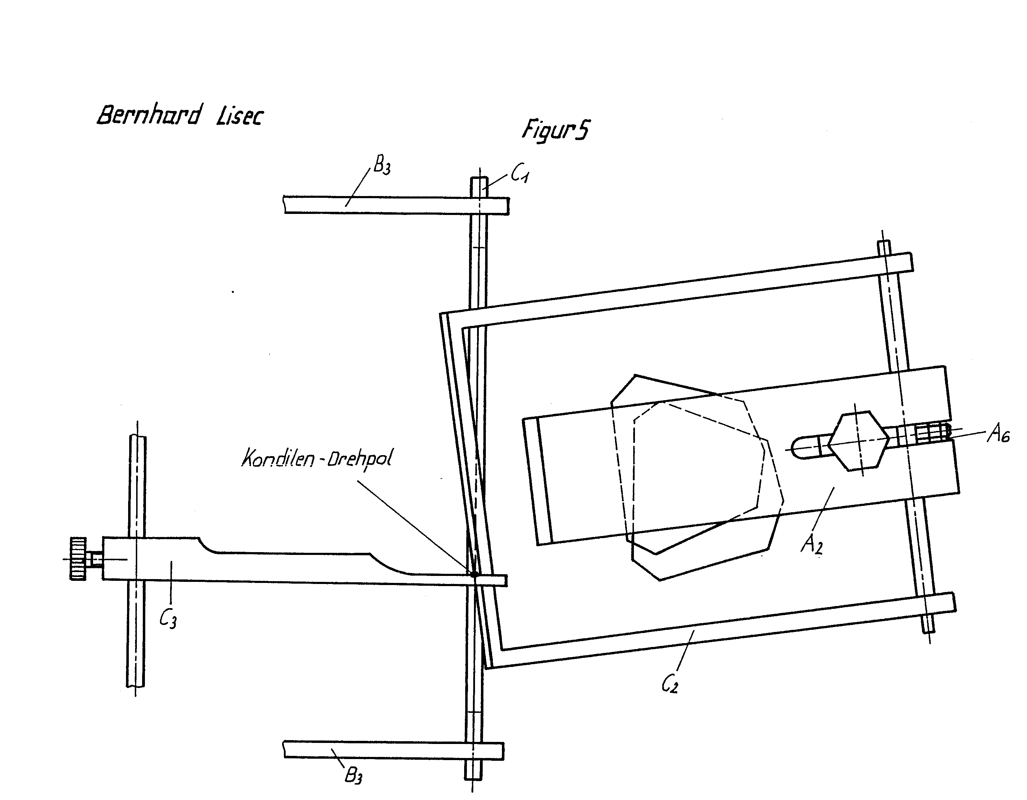

Der Grund: Wird eine Tangente bei kleinem Winkel parallel zu einer Linie entfernt oder genähert, so wandert der Schnittpunkt um ein Vielfaches aus. Die Seiten der durch die Kieferöffnung gedrehten Meßrahmen bilden zum feststehenden Meßrahmen vier Tangenten. Bringt man nun die Modelle wieder in zentrale, verzahnte Stellung, so werden die dadurch wieder in Parallelstellung zurückgedrehten Platten, wenn eine Korrektur notwendig war, eine kleine meßbare Parallelverschiebung ihrer Kanten aufweisen, die den Bereich der bis jetzt erreichten Genauigkeit angibt und innerhalb jener, bach Wiedereinsetzen des Scharnierachsregistrates, die gesuchte Scharnierachse konstruiert werden kann. Zum Auffinden der Gelenkskopfdrehpole wird nach Entfernen des Verbindungsbügels A4, die Schwinge C2 Fig. 1,2,3 und 5 nach dem Festlegen der Scharnierachse auf den Oberkiefermodellhalter so aufgeschoben, daß die Meßkante des an der Schwinge befindlichen Meßlineals mit der Achsenlängsmarkierung der Hilfsachse in Deckung kommt. Bei Einsetzen der Seitbißregistrate in die Modelle erscheint die Kante des Meßlineals C2, gegen die Hilfsachsen verdreht, die Schnittpunkte stellen die Drehpole der Gelenksköpfe dar, deren Lage durch die zwei feststellbaren Zeiger C3 Fig. 1,5 markiert wird, und kann nach Montage eines Artikulatoroberteils direkt auf diesen übertragen werden.

Die Seitverlagerung des Unterkiefers kann durch Einlegen entsprechend genommener Registrate in die Modelle als Abweichung an der Skala des Verbindungsbügels A4, Fig. 1, wenn der zugehörige in Zeiger verzahnter Modellstellung darauf eingestellt wurde, abgelesen werden.

Erklärung der Zeichnungen:

Figur 1

Gerät von oben

Figur 2

Gerät von vorne

Figur 3

Gerät von der Seite

Figur 4

Die durch das Scharnierachsregistrat in Scharnierachsposition gehaltenen Modelle und die davon abhängige Verdrehung der äußeren Registrierrahmen und den in der Zeichnung verlängert eingezeichneten Konstruktionslinien K1 und den auf den Schnittpunkt fixierten Hilfsachshalter B3.

Figur 5

Darstellung der Drehpolfeststellung der Unterkiefergelenksköpfe. Drefpolanzeiger auf den Schnittpunkt des Meßlineals C2 mit der Hilfsachslängslinie C1 eingestellt.

## Ansprüche

1. Gerät zur oralfernen und patietenfernen Bestimmung der Scharnierachse und der linearen Grenzbewegungen des Unterkiefers gekennzeichnet dadurch, daß für jede Kieferseite zwei viereckige vorzugsweise rechteckige Meßrahmen B1 und B2, von denen die zwei inneren Meßrahmen B2 mit der Grundplatte durch einen Fuß fest verbunden sind und die äußeren zwei Meßrahmen B1 durch je zwei än ihrer Innenseite befestigten Führungsstifte, die durch die Öffnung der inneren Meßrahmen B1, ragen und die in den an den Stirnseiten befindlichen, den Führrungsstiften entsprechenden Bohrungen, die äußeren Meßrahmen B1 verbindenden Steges B1 beidseitig so eingeschoben sind, daß der Verbindungssteg B1 die äußeren Meßrahmen B1 über einen auf ihrem Verbindungssteg verschraubbaren, zweiteiligen Oberkiefermodellträger A4, A2, durch das Oberkiefermodell von im Gerät verzahnt montierten Modellen in kantendeckender Stellung an die Außenflächen der feststehenden inneren Meßrahmen B2 gehalten werden.

2. Gerät zur oralfernen und patientenfernen Bestimmung der Scharnierachse und der linearen Grenzbewegungen des Unterkiefers nach Anspruch 1 gekennzeichnet dadurch, daß ein zweiteiliger Unterkiefermodellträger A1, der auf der Grundplatte durch zwei durch bogenförmige Schlitze in seinem Unterteil geführte Schrauben horizontal Schwenkbar und feststellbar ist, und dessen Oberteil der an seiner Oberseite Mittel zur Befestigung des Unterkiefermodells aufweist, durch an seiner Unterseite angebrachte halbkugeligen Vertiefungen in die zwei kugelförmige Zapfen des Unterteils eingreifen, auf dem Unterteil seitlich schwenkbar ist und durch zwei seitlich angebrachte Schrauben, die in gegen die Kugelzapfen des Unterteil A1 pressen, zu seinem Unterteil in jeder seitlich geschwenkten Lage Festgestellt werden kann.

3. Gerät zur oralfernen und patientenfernen Bestimmung der Scharnierachse und der linearen Grenzbewegungen des Unterkiefers nach Anspruch 1 und 2 gekennzeichnet dadurch, daß der obere Modellhalter A4,A2 zur Verbindung des Oberkiefermodells OKM mit dem Verbindungssteg der äußeren Meßrahmen B1 aus swei Teilen besteht, dem als Verbindungsbügel ausgebildeten Teil A4 der in seinem abgewinkelten Fuß, der in mit dem Verbindungssteg von B1 durch eine Schraube und eine Druckplatte verbindet und der mit einer wesentlich größeren Bohrung oder einem Schlitz ausgestattet ist als der Durchmesser der Befestigungsschraube beträgt und der, in dem, dem Fuß abgewandten Anteil, mit einem bogenförmigen wesentlich breiteren Schlitz ausgestattet ist, als dem Durchmesser, der ihn mit seinem zweiten Teil A2 verbindenden Schraube, Teil A2 verfügt an seiner Unterseite über ein zur Oberkiefermodellbefestigung dienendes Mittel und an seinem vorderen Ende über einen Schlitz A6 und eine Skala.

4. Gerät zur oralfernen und patientenfernen Bestimmung der Scharnierachse und der linearen Grenzbewegungen des Unterkiefers nach Anspruch 1,2, und 3 gekennzeichnet dadurch, daß die in Anspruch 1 beschriebenen äußeren Meßrahmen B1, durch die, durch den im Anspruch 2 beschriebenen unteren Modellträger A1, ausgerichteten Kiefermodelle,

durch das Einsetzen eines Scharnierachsregistrates zwischen die Modelle, die äußeren Meßrahmen B1 gegen die feststehenden Meßrahmen B2 in ihrer Ebene gedreht gehalten werden, und auf einer, auf die äußeren Meßrahmen B1 außen aufgeklebten Folie, durch Verbinden, der sich, durch die überschneidenden Kanten der äußeren Meßrahmen B1 und der inneren Meßrahmen B2 an jeder Seite des Meßgerätes, gebildeten vier Winkel Fig.4, durch auf die Folien gezeichnete Verbindungslinien K1 der gegenüberliegenden Winkelspitzen, die dem Scharnierachsregistrat entsprechende durch die Kreuzungspunkte führende imaginäre verlängerte Scharnierachse definiert ist. Fig. 4

5. Gerät zur oralfernen und patientenfernen Bestimmung der Scharnierach- se und der linearen Grenzbewegungen des Unterkiefers nach Anspruch 1,2,3 und 4 dadurch gekennzeichnet, daß ein an der rechten und linken Seite des Gerätes angebrachter Hilfsachsenhalter B3, in denen sich an einem ihrer Enden eine dem Durchmesser der Hilfsachse C1 entsprechende Bohrung befindet und die durch einen Schlitz an ihrem anderen Ende, mit dem Zentrum ihrer Hilfsachsbohrungen C1, auf die,auf die äußeren Meßrahmen B1, aufgeklebten Folien, konstruierten Scharnierachspunkte eingestellt, mit einer Schraube auf den für sie auf der Grundplatte angebrachten Böcken festgestellt werden.

6. Gerät zur oralfernen und patientenfernen Bestimmung der Scharnierachse und der linearen Grenzbewegungen des Unterkiefers nach Anspruch 1,2,3,4 und 5 gekennzeichnet durch eine Schwinge C2 die aus einem Meßlineal das durch zwei fest an seinen Enden mit dem Meßlineal verbundenen Stangen die durch je eine Bohrung an ihren dem Meßlineal abgewandten Enden um einen Querbalken, an dessen Enden zwei Zapfen herausragen, drehbar so gelagert ist, daß das Meßlineal mit seiner der Schwinge abgewandten Kante durch eine spielfreie drehbare Lagerung des Querbalkens an der Stirnseite eines quaderförmigen Blockes, der der Befestigung der Schwinge C2 im Schlitz A6 des Oberkiefermodellhalters A2 dient, so gelagert ist, daß das Meßlineal einer horizontalen Verdrehung des Oberkiefermodellhalters folgt, jedoch nicht einer Schrägverstellung.

7. Gerät zur oralfernen und patientenfernen Bestimmung der Scharnierachse und der linearen Grenzbewegungen des Unterkiefers nach Anspruch 1,2,3,4,5 und 6 gekennzeichnet durch eine Hilfsachse C1, die in ihrem Arbeitsbereich der Länge nach, ihrem halben Durchmesser entsprechend ausgenommen ist und auf dieser Fläche eine ihrem Achsenzentrum entsprechende Längslinie trägt und die in die Bohrungen C1 der Hilfsachsträger B3 eingeschoben wird.

8. Gerät zur oralfernen und patien tenfernen Bestimmung der Scamierachse und der linearen Grenzbewegungen des Unterkiefers nach Anspruch 1,2,3,4,5,6, und 7 durch zwei Zeiger C3 die auf einer im Gerät rückwärts zwischen zwei ihr zugehörigen auf der Grundplatte befestigten Lagerböcken, genau senkrecht zur Ebene der Meßrahmen B1 und B2 gelagerten Achse, auf dieser seitverschieblich feststellbar, so angebracht sind, daß die Zeiger C3 ohne ihre seitliche Einstellung zu verändern, durch Drehen der Achse ausschwenkbar sind.

9. Gerät zur oralfernen und patientenfernen Bestimmung der Scharnierachse und der linearen Grenzbewegungen des Unterkiefers nach Anspruch 1,2,3,4, und nach einen oder mehreren der vorherigen Ansprüche gekennzeichnet durch, einen Zeiger A3, der auf einer im Gerät vorne zwischen zwei ihr zugehörigen auf der Grundplatte befestigten Lagerböcken genau senkrecht zur Ebene der Meßrahmen B1 und B2 gelagerten Achse auf dieser seitverschieblich feststellbar so angebracht ist, daß der Zeiger A3 ohne seine seitliche Einstellung zur Skala A6 des oberen Modellträgers A2 zu verändern durch Drehen der Achse ausschwenkbar ist.

0 191 755

Bernhard Lisec    Figur 1

Bernhard Lisec

Figur2

A₂

B₃

C₁

B₂

B₂

B₁

B₁

A₁

A₁

0 191 755

Bernhard Lisec

Figur 3

0 191 755

Bernhard Lisec

## Figur 4

Registrier-Biß

$A_1$

$A_2$

$B_1$

$B_2$

$B_3$

KL

KL

0 191 755

Figur 5

Bernhard Lisec

Kondilen - Drehpol